# EUROPEAN PATENT SPECIFICATION

(11) **EP 2 627 141 B1**
(45) Date of publication and mention of the grant of the patent: **24.07.2019**
(21) Application number: 12719920.6
(22) Date of filing: 11.01.2012
(51) Int. Cl.: H04L 5/00, H04W 72/04, H04W 72/08, H04W 16/14, H04L 5/14

(54) **INTERFERENCE PROCESSING METHOD AND DEVICE**
INTERFERENZVERARBEITUNGSVERFAHREN UND -VORRICHTUNG
PROCÉDÉ ET DISPOSITIF DE TRAITEMENT D'INTERFÉRENCES

(30) Priority: 11.11.2010 CN 201010540334
(43) Date of publication of application: 14.08.2013
(60) Divisional application: 15154145.5
(73) Proprietor: Huawei Technologies Co., Ltd., Longgang District Shenzhen, Guangdong 518129 (CN)
(72) Inventor: YU, Yinghui, Shenzhen Guangdong 518129 (CN); WAN, Lei, Shenzhen Guangdong 518129 (CN)
(74) Representative: Isarpatent
(86) International application number: PCT/CN2012/070223
(87) International publication number: WO 2012/062226

(56) References cited:
- EP-A1- 2 107 838
- WO-A2-2010/124241
- CN-A- 101 765 056
- CN-A- 101 772 222
- CN-A- 101 873 712
- US-A1- 2008 064 432
- US-A1- 2010 008 282
- US-A1- 2010 009 634
- US-A1- 2010 029 262
- US-A1- 2010 222 062

## Description

### FIELD OF THE INVENTION

The present invention relates to the field of wireless communications technologies, and in particular, to an interference processing method for a serving base station and a base station.

### BACKGROUND OF THE INVENTION

In a frequency division duplexing (FDD, Frequency Division Duplexing) system, in one aspect, a downlink (DL, Downlink) frequency band and an uplink (UL, Uplink) frequency band usually use a same bandwidth, and traffic volume of the DL frequency band is usually higher than traffic volume of the UL frequency band. As a result, a part of UL resources of the UL frequency band are relatively idle. In another aspect, in a case where UL traffic volume matches DL traffic volume, UL spectrum efficiency is higher than DL spectrum efficiency, so that the utilization of a UL subframe is lower than that of a DL subframe and redundancy occurs in UL resources. Therefore, to effectively use redundant UL resources, a part of UL access link resources in the FDD system may also be used as a DL access link or a radio backhaul link in a time division duplexing (TDD, Time Division Duplexing) system, so as to improve the utilization of an FDD UL frequency band.

When UL subframes of a neighboring base station that correspond to a part of FDD UL subframes of a base station are used for downlink data transmission of the neighboring base station, for backward compatibility of a downlink data transmission feedback from a UE to the base station and flexible scheduling of data in a downlink subframe of the base station, a base station providing an FDD UL resource will send uplink control signaling through a blank uplink subframe. However, sending the uplink control signaling will interfere with receiving downlink control channel signaling of a downlink subframe in an FDD UL frequency band by the neighboring base station.

To ensure backward compatibility of a downlink data transmission feedback from a UE to a base station and flexible scheduling of data in a downlink subframe of the base station, a base station using the TDD access technology is also capable of providing a blank uplink subframe and sending uplink control signaling through the blank uplink subframe. However, sending the uplink control signaling will interfere with receiving downlink control channel signaling of a downlink subframe in a TDD frequency band by a neighboring base station. PCT application WO 2010/124241 A2 discloses to facilitate configuring a sounding reference signal transmission in a wireless communication environment. A UE can employ coordinated multi-point transmission and/or reception such that multiple cells collaborate to transmit data to the UE and/or receive data from the UE.

US application US2010/0008282 A1 discloses techniques for supporting communication in a wireless communication network.

### SUMMARY

The present invention is defined by the appended claims. Disclosed is an interference processing method and apparatus to solve a signaling interference problem in uplink and downlink control channels between neighboring base stations.

According to one aspect, an interference processing method is provided, including:
receiving, by a user equipment UE, uplink control channel configuration information of a cell of a neighboring base station, which is sent by a serving base station, where the uplink control channel configuration information includes physical uplink control channel PUCCH configuration information, physical random access channel PRACH configuration information, or channel sounding reference symbol Sounding RS configuration information of the cell of the neighboring base station;
determining, by the UE, according to the configuration information, a location where the serving base station suffers interference from the neighboring base station; and
eliminating the interference according to the determined interference location.

According to one aspect, another interference processing method is provided, including:
receiving, by a serving base station, configuration information of a cell of a neighboring base station, where the configuration information of the cell of the neighboring base station includes uplink control channel configuration information, downlink control channel configuration information, or configuration information of an interference frequency domain or time domain of the cell of the neighboring base station; and
determining, by the serving base station, an overlapping part between resources according to the configuration information of the cell of the neighboring base station and configuration information of a cell of the serving base station, and allocating a resource, where the allocating a resource includes not allocating the overlapping part between the resources in the configuration information of the cell of the serving base station and the cell of the neighboring base station to the serving base station.

According to another aspect, an interference processing apparatus is provided, including:
a transmission module, configured to receive uplink control channel configuration information of a cell of a neighboring base station, which is sent by a serving base station, where the uplink control channel configuration information includes physical uplink control channel PUCCH configuration information, physical random access channel PRACH configuration information, or channel sounding reference symbol Sounding RS configuration information of the cell of the neighboring base station;
a determining module, configured to determine, according to the configuration information received by the transmission module, a location where the serving base station suffers interference from the neighboring base station; and
a processing module, configured to eliminate the interference according to the interference location determined by the determining module.

According to another aspect, another interference processing apparatus is provided, including:
a receiving and sending module, configured to receive configuration information of a cell of a neighboring base station, where the configuration information of the cell of the neighboring base station includes uplink control channel configuration information, downlink control channel configuration information, or configuration information of an interference frequency domain or time domain of the cell of the neighboring base station; and
an allocation module, configured to determine an overlapping part between resources according to the configuration information of the cell of the neighboring base station and configuration information of a cell of a serving base station, and allocate a resource, where the allocating a resource includes not allocating the overlapping part between the resources in the configuration information of the cell of the serving base station and the cell of the neighboring base station to the serving base station.

According to an interference processing method provided herein, a user equipment UE receives uplink control channel configuration information of a cell of a neighboring base station, which is sent by a serving base station, and the UE determines, according to the configuration information, a location where the serving base station suffers interference from the neighboring base station, and eliminates the interference according to the location. In this way, when the neighboring base station sends uplink control signaling, interference between sending the uplink control signaling in an uplink control channel and receiving downlink control signaling in a downlink control channel at a corresponding location of the serving base station is eliminated.

In addition, when the neighboring base station sends the uplink control signaling at a co-channel or an adjacent channel location with the serving base station, interference from sending the uplink control signaling in the uplink control channel to receiving the downlink control signaling in the downlink control channel of the serving base station can be eliminated; alternatively, interference from sending downlink control signaling in a downlink control channel of the neighboring base station at a co-channel or an adjacent channel location with the serving base station to receiving uplink control signaling in an uplink control channel of the serving base station is eliminated.

### BRIEF DESCRIPTION OF THE DRAWINGS

To describe the technical solutions in the embodiments of the present invention more clearly, the following briefly introduces the accompanying drawings required for describing the embodiments. Apparently, the accompanying drawings in the following descriptions show merely some embodiments of the present invention, and persons of ordinary skill in the art may still derive other drawings from these accompanying drawings without creative efforts.
FIG. 1 is a schematic diagram of an application scenario where a part of subframes in an FDD UL frequency band are used to transmit downlink subframes;
FIG. 2 is a schematic diagram of another application scenario where a part of subframes in an FDD UL frequency band are used for downlink transmission;
FIG. 3 is a schematic diagram of an application scenario of downlink transmission using a part of subframes of an FDD UL resource;
FIG. 4 is a schematic diagram of another application scenario of downlink transmission using a part of subframes of an FDD UL resource;
FIG. 5 is a schematic diagram of another application scenario of downlink transmission using a part of subframes of an FDD UL resource;
FIG. 6a is a schematic diagram of an application scenario of downlink transmission using a part of subframes of an FDD UL resource;
FIG. 6b is a schematic diagram of another application scenario of downlink transmission using a part of subframes of a part of FDD UL resources;
FIG. 7 is a diagram of an application scenario of downlink transmission using a TDD uplink subframe for downlink transmission;
FIG. 8 is a schematic diagram of an application scenario of downlink transmission using a part of subframes of an FDD UL resource;
FIG. 9 is a schematic diagram of another application scenario of downlink transmission using a part of subframes of an FDD UL resource;
FIG. 10a is a schematic diagram of an application scenario of downlink transmission using a part of subframes of an FDD UL resource;
FIG. 10b is a schematic diagram of another application scenario where a part of sub frames of an FDD UL resource are used for downlink transmission;
FIG. 11a is a schematic diagram of an application scenario where a part of subframes of an FDD UL resource are used for downlink transmission;
FIG. 11b is a schematic diagram of another application scenario of downlink transmission using a part of subframes of an FDD UL resource;
FIG. 12 shows another application scenario of downlink transmission using a TDD uplink sub frame for downlink transmission;
FIG. 13 is a schematic flowchart of an interference processing method;
FIG. 14 is a schematic flowchart of an interference processing method;
FIG. 15 is a schematic flowchart of an interference processing method;
FIG. 16 is a schematic flowchart of an interference processing method;
FIG. 17 is a schematic flowchart of an interference processing method;
FIG. 18 is a schematic structural diagram of an interference processing method;
FIG. 19 is a schematic structural diagram of an interference processing method;
FIG. 20 is a schematic flowchart of an interference processing method;
FIG. 20a is a schematic flowchart of an interference processing method;
FIG. 21 is a schematic structural diagram of an interference processing apparatus;
FIG. 22 is a schematic structural diagram of another interference processing apparatus; and
FIG. 23 is a schematic structural diagram of another interference processing apparatus.

### DETAILED DESCRIPTION OF THE EMBODIMENTS

To make the objectives, technical solutions, and advantages of the present invention more comprehensible, the following further describes the present invention in detail with reference to the accompanying drawings. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

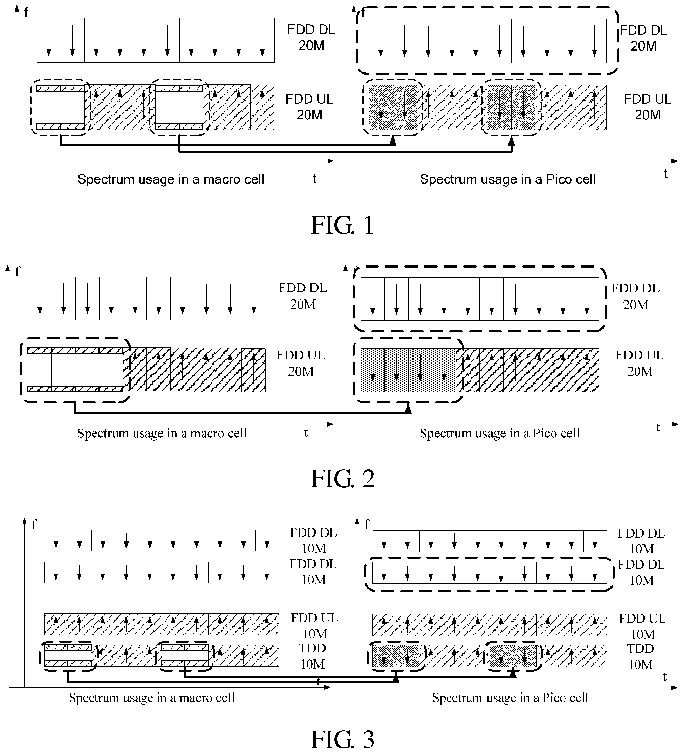

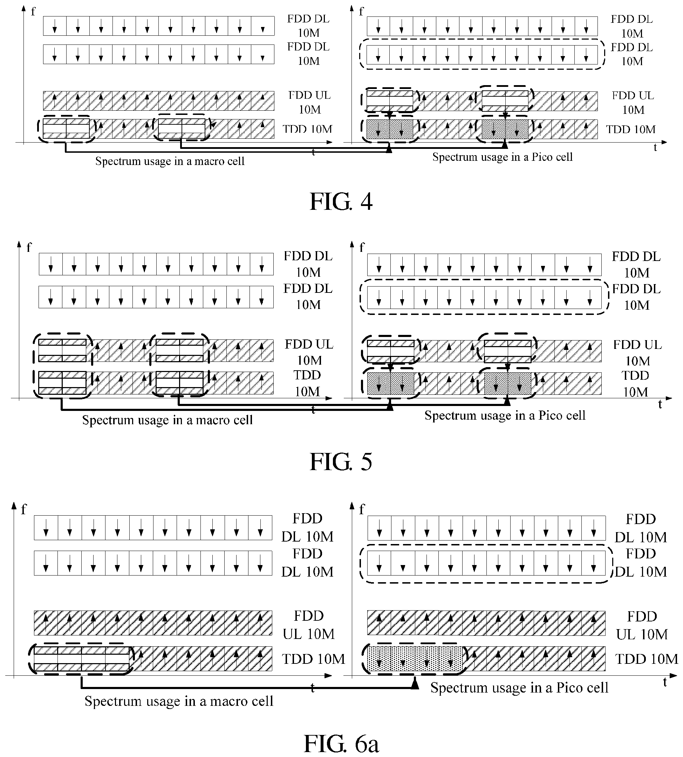

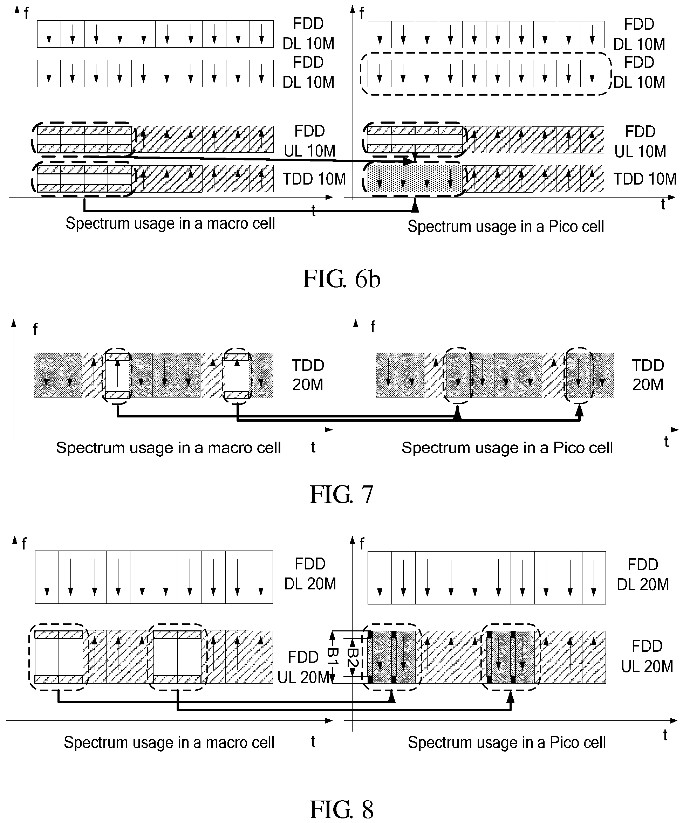

In the present invention, a heterogeneous scenario is taken as an example. An application of a homogeneous scenario is similar to an application of the heterogeneous scenario. The heterogeneous scenario means that low power nodes are distributed in a coverage area of a macro base station to form heterogeneous systems having different node types in the same coverage area. A low power node (LowPowerNode, LPN) includes a micro cell (Micro Cell), a pico cell (Pico Cell), an RRH (RemoteRadio Head), a relay node (Relay Node, RN), a Femto (a nano cellular base station, which generally refers to a home base station), or the like. Heterogeneous scenarios include but are not limited to those illustrated in embodiments of the present invention. In the embodiments of the present invention, a macro cell and a micro cell are taken as examples for illustration. FIG. 1 is a schematic diagram of an application scenario where a part of subframes in an FDD UL frequency band are used to transmit downlink subframes according to an embodiment of the present invention, and the scenario is an application scenario in TDD compatibility mode. FIG. 2 is a schematic diagram of another application scenario where a part of subframes in an FDD UL frequency band are used for downlink transmission according to an embodiment of the present invention, and the scenario is an application scenario in non-TDD compatibility mode. FIG. 3 is a schematic diagram of an application scenario of downlink transmission using a part of subframes of an FDD UL resource according to an embodiment of the present invention, and the scenario is an application scenario in TDD compatibility mode. FIG. 4 is a schematic diagram of another application scenario of downlink transmission using a part of subframes of an FDD UL resource according to an embodiment of the present invention, and the scenario is an application scenario in TDD compatibility mode. FIG. 5 is a schematic diagram of another application scenario of downlink transmission using a part of subframes of an FDD UL resource according to an embodiment of the present invention, and the scenario is an application scenario in TDD compatibility mode. FIG. 6a is a schematic diagram of an application scenario of downlink transmission using a part of subframes of an FDD UL resource according to an embodiment of the present invention; and FIG. 6b is a schematic diagram of another application scenario of downlink transmission using a part of subframes of a part of FDD UL resources according to an embodiment of the present invention; and the application scenarios illustrated in FIG. 6a and FIG. 6b are application scenarios in non-TDD compatibility mode. In FIG. 1 to FIG. 6b:
Access links of a macro cell are as follows:
DL (from the macro cell to a user equipment of macro cell (MUE, UE of macro cell)): An FDD DL frequency band is used, which is shown as FDD DL white boxes in the figures; and
UL (from the MUE to the macro cell): A part of subframes in an FDD UL frequency band are used, which are shown as slash subframes in the FDD UL frequency band in the figures.

A pico cell has two access links:
One is an FDD access link, and the FDD access link is configured by a system.

DL (from the micro base station to a user equipment of pico cell (PUE, UE of Pico cell)): An FDD DL frequency band is used, which is shown as white subframes in the FDD DL frequency band in figures; and

UL (from the PUE to the pico cell): A part of subframes in an FDD UL frequency band are used, which are shown as slash subframes in the FDD UL frequency band in the figures.

The other is a TDD access link, and the TDD access link uses a resource in an FDD UL.

DL (from the pico cell to the PUE): A part of subframes in an FDD UL frequency band are used, which are shown as black-dotted gridding subframes in the FDD UL frequency band in the figures; and

UL (from the PUE to the pico cell): A part of subframes in the FDD UL frequency band are used, which are shown as slash subframes in the FDD UL frequency band in the figures.

An uplink control resource, for example, a physical uplink control channel (Physical Uplink Control Channel, PUCCH) resource, a physical random access channel (Physical Random Access Channel, PRACH) resource, or a channel sounding reference symbol Sounding RS resource, can be reserved in a blank uplink subframe to maintain backward compatibility. In the embodiments of the present invention, a PUCCH is taken as an example. A PUCCH resource is reserved on the edge of an uplink frequency band of a blank subframe in FIG. 1 to FIG. 6. The PUCCH resource may be used for an ACK/NACK feedback and/or a CQI (Channel Quality Indicator) feedback from a UE. Reservation of another resource is similar to that of the PUCCH resource, only that locations for resource reservation are different.

FIG. 7 is a diagram of an application scenario where a TDD uplink subframe is used for downlink transmission according to an embodiment of the present invention, and the scenario adopts a radio access mode in a TDD system. Details are as follows:
Access links of a macro base station are as follows:
Downlink: TDD downlink subframes are shown as black fine grids in the figure; and
Uplink: TDD uplink subframes are shown as slashes and shadows in the figure.

Blank uplink subframe: In a blank uplink subframe, only an uplink control channel is sent and no data service is sent. A resource sent through an uplink control channel includes at least one of, for example, a PUCCH resource, a PRACH resource, or a Sounding RS resource. A PUCCH resource is reserved on the edge of an uplink frequency band of a blank subframe. The PUCCH resource may be used for an ACK/NACK feedback and/or a CQI feedback from a UE. Reservation of another resource is similar to that of the PUCCH resource, only that locations for resource reservation are different.

Access links of a micro base station are as follows:
Downlink: TDD downlink subframes are shown as black fine grids in the figure; and
Uplink: TDD uplink subframes are shown as slashes and shadows in the figure.

Normal downlink data transmission is performed on a downlink subframe corresponding to the blank uplink subframe of the macro base station.

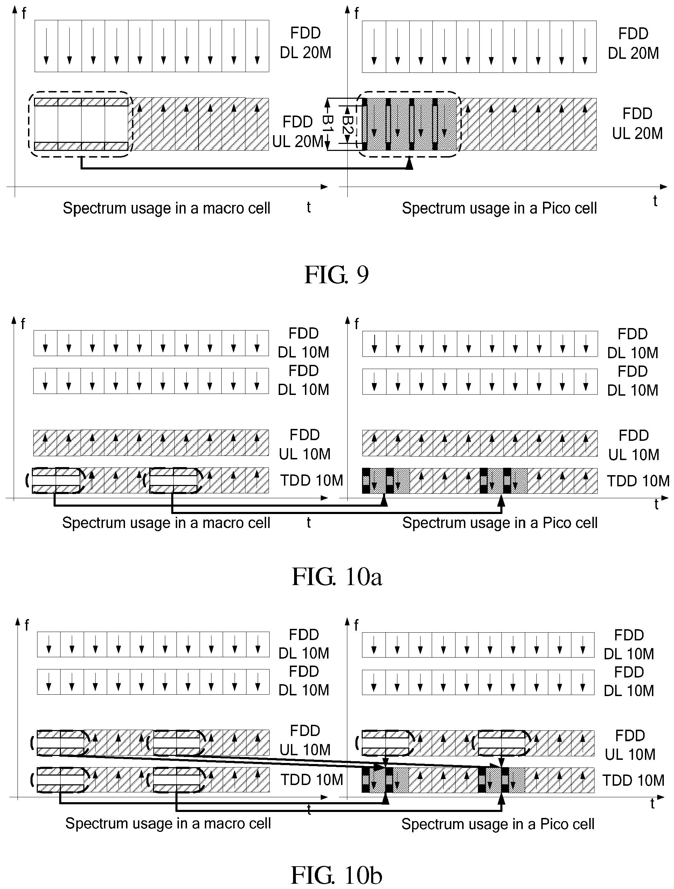

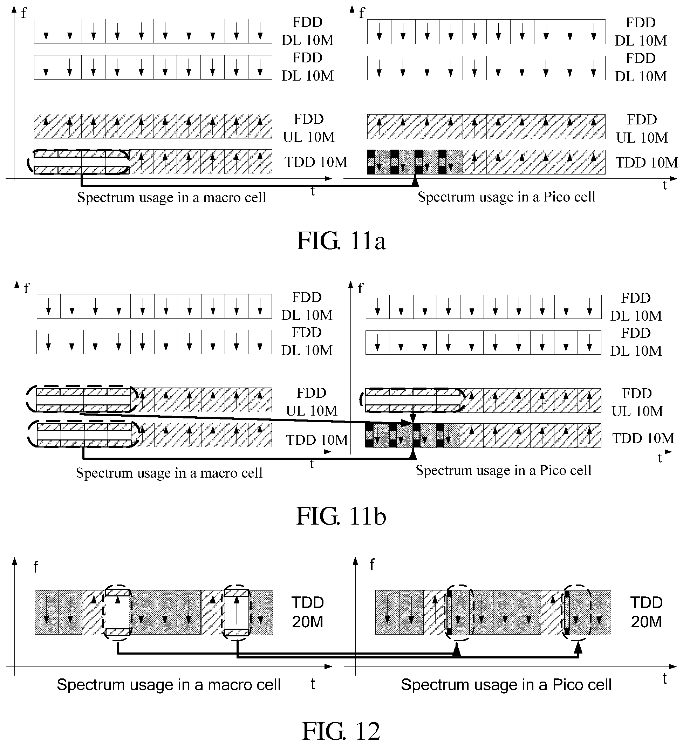

FIG. 8 is a schematic diagram of an application scenario of downlink transmission using a part of subframes of an FDD UL resource according to an embodiment of the present invention, the scenario is an application scenario where transmission in an uplink control channel interferes with a downlink control channel that is in a same frequency band as the uplink control channel, and the scenario is in TDD compatibility mode. FIG. 9 is a schematic diagram of another application scenario of downlink transmission using a part of subframes of an FDD UL resource according to an embodiment of the present invention, and the scenario is in non-TDD compatibility mode and is an application scenario where transmission in an uplink control channel interferes with a downlink control channel that is in a same frequency band as the uplink control channel. FIG. 10a is a schematic diagram of an application scenario of downlink transmission using a part of subframes of an FDD UL resource according to an embodiment of the present invention; and FIG. 10b is a schematic diagram of another application scenario of downlink transmission using a part of subframes of an FDD UL resource according to an embodiment of the present invention; and the scenarios in FIG. 10a and FIG. 10b are in TDD compatibility mode and are application scenarios where transmission in an uplink control channel interferes with a downlink control channel of a neighboring base station, where the downlink control channel and the uplink control channel are in adjacent frequency bands. FIG. 11a is a schematic diagram of an application scenario of downlink transmission using a part of subframes of an FDD UL resource according to an embodiment of the present invention; and FIG. 11b is a schematic diagram of another application scenario where a part of subframes of an FDD UL resource are used for downlink transmission according to an embodiment of the present invention; and FIG. 11a and FIG. 11b are in non-TDD compatibility mode and are application scenarios where transmission in an uplink control channel interferes with a downlink control channel of a neighboring base station, where the downlink control channel and the uplink control channel are in adjacent frequency bands. FIG. 12 shows another application scenario of downlink transmission using a TDD uplink subframe for downlink transmission according to an embodiment of the present invention, and the scenario is an application scenario where transmission in an uplink control channel interferes with a downlink control channel of a neighboring base station. In FIG. 8 to FIG. 12, a case where an uplink control channel of a macro base station interferes with a downlink control channel of a micro base station is further provided. Small boxes marked in black are schematic diagrams of interference locations. In FIG. 8 to FIG. 12, a physical uplink control channel PUCCH is taken as an example of the uplink control channel, and a physical downlink control channel (Physical Downlink Control Channel, PDCCH) is taken as an example of the downlink control channel. A case where another uplink control channel (such as a PRACH and Sounding RS) interferes with another downlink control channel (such as a PDCCH, CRS, a synchronization channel, and a broadcast channel), or interference from a downlink control channel to an uplink control channel is processed similarly to interference between a PUCCH and a PDCCH. Processing methods are completely the same, only that the interference locations are different. Therefore, details are not repeated herein.

In the foregoing application scenarios, to effectively utilize redundant UL resources or implement different uplink and downlink configurations of TDD systems in different areas, resources of a part of uplink subframes in an FDD UL frequency band or a part of uplink subframes of a TDD system may be used for TDD DL access link resources, thereby improving the utilization of the FDD UL frequency band or implementing different uplink and downlink configurations of the TDD systems in different areas. However, sending signaling of a part of uplink subframes in the FDD UL frequency band or a part of TDD uplink subframes interferes with receiving DL signaling in an FDD UL frequency band of a neighboring base station or with receiving DL signaling in a TDD frequency band.

In addition, if a TDD access system and an FDD access system of a base station are at a same site, sending signaling of a part of uplink subframes in an FDD UL frequency band of the base station interferes with receiving DL signaling in the FDD UL frequency band of the base station.

In embodiments of the present invention, a macro base station is taken as an example of a neighboring base station, and a micro base station is taken as an example of a serving base station for illustration. Application scenarios of the method include but are not limited to those illustrated in the embodiments of the present invention.

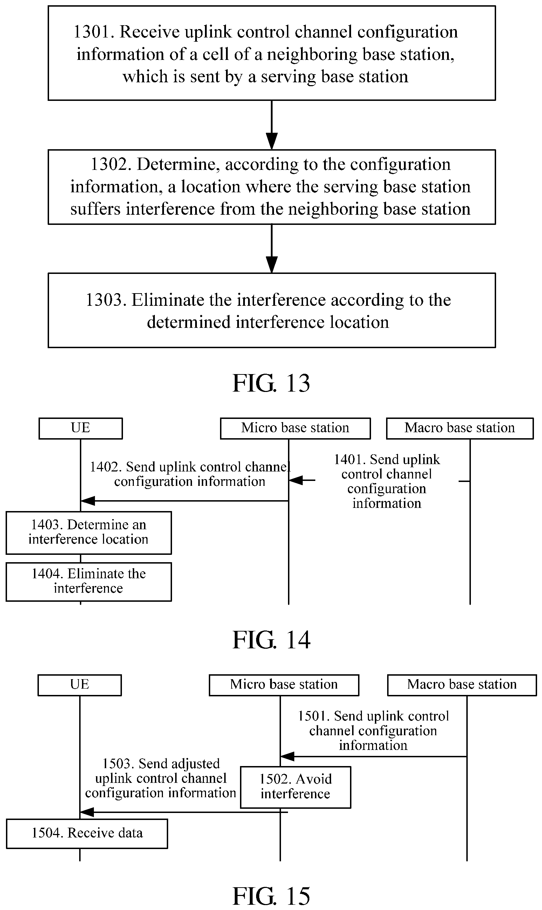

FIG. 13 is a schematic flowchart of an interference processing method according to an embodiment of the present invention. This embodiment includes:
1301. A user equipment UE receives uplink control channel configuration information of a cell of a neighboring base station, which is sent by a serving base station, where the uplink control channel configuration information includes physical uplink control channel PUCCH configuration information, physical random access channel PRACH configuration information, or channel sounding reference symbol Sounding RS configuration information of the cell of the neighboring base station.
1302. The UE determines, according to the configuration information, a location where the serving base station suffers interference from the neighboring base station.
1303. Eliminate the interference according to the determined interference location.

According to an interference processing method provided in an embodiment of the present invention, a user equipment UE receives uplink control channel configuration information of a cell of a neighboring base station, which is sent by a serving base station, and the UE determines, according to the configuration information, a location where the serving base station suffers interference from the neighboring base station, and eliminates the interference according to the location. In this way, when the neighboring base station sends uplink control signaling, interference between sending the uplink control signaling in an uplink control channel and receiving downlink control signaling in a downlink control channel at a corresponding location of the serving base station is eliminated.

In addition, when the neighboring base station sends the uplink control signaling at a co-channel or an adjacent channel location with the serving base station, interference from sending the uplink control signaling in the uplink control channel to receiving the downlink control signaling in the downlink control channel of the serving base station can be eliminated; alternatively, interference from sending downlink control signaling in a downlink control channel of the neighboring base station at a co-channel or an adjacent channel location with the serving base station to receiving uplink control signaling in an uplink control channel of the serving base station is eliminated.

FIG. 14 is another interference processing method according to an embodiment of the present invention, including:
1401. A macro base station sends uplink control channel configuration information of a cell of the macro base station to a micro base station.

The uplink control channel configuration information may include physical uplink control channel (PUCCH) configuration information, physical random access channel (PRACH) configuration information, or channel sounding reference symbol (Sounding RS) configuration information of the cell of the macro base station.

The PUCCH configuration information includes:
a location of an uplink control resource, used to determine a location of a resource block occupied by a PUCCH;
a cyclically shifted sequence and an orthogonal code sequence of the uplink control resource, used to determine a resource code of the PUCCH; and
an offset of an uplink control channel, used to determine a location of a resource occupied in the resource block by the PUCCH.

The PRACH configuration information includes:
a PRACH configuration index, used to determine a location of a resource block occupied by a PRACH time domain in a radio frame;
a frequency domain offset of the PRACH, used to determine a location of a PRACH frequency domain; and
a PRACH access preamble configuration, used to determine a code that initiates a random access.

The Sounding RS configuration information includes:
a bandwidth configuration of a Sounding RS; and
a subframe configuration of the Sounding RS.

1402. The micro base station sends the uplink control channel configuration information of the cell of the macro base station to a UE.

The sending of the configuration information may be sent in broadcast mode, or may be sent by adopting dedicated signaling.

If the micro base station sends configuration information of a neighboring base station in broadcast mode, an applicable version or an applicable case can be made clear in an SIB (System Information Block, system information block). For example, the applicable version is, for example, 3GPP Release 10, 3GPP Release 11, 3GPP Release 12, or the like. The applicable case means determining a subframe of a frequency band near or a subframe corresponding to an uplink subframe of a UL frequency band where downlink data transmission exists, for example, an uplink subframe of a UL frequency band, a TDD uplink subframe, a subframe of a frequency band near the UL frequency band, or a subframe corresponding to an uplink subframe of the UL frequency band near a UL frequency band, where downlink data transmission occurs in the frequency band near the UL frequency band, for sending interference elimination information.

If the micro base station sends configuration information of a neighboring base station, for example, an RRC reconfiguration message and the like, through signaling dedicated for radio resource control (Radio Resource Control, RRC), the base station selects UE-dedicated signaling according to a UE capability to send the configuration information.

1403. The UE determines, according to the received uplink control channel configuration information of the cell of the macro base station, a location where the micro base station suffers interference from the macro base station.

When the uplink control channel configuration information is the PUCCH configuration information, the interference location includes an overlapping part between a location of a PUCCH resource of a cell of the neighboring base station and a location of a downlink control channel resource of a cell of a serving base station.

Furthermore, that the UE determines, according to the configuration information, a location where the serving base station suffers interference from the neighboring base station includes:
The UE acquires the location of the PUCCH resource of the cell of the neighboring base station according to a location and an offset of an uplink control resource in the PUCCH configuration information of the cell of the neighboring base station, and determines the interference location according to the location of the PUCCH resource of the cell of the neighboring base station and the location of the downlink control channel resource of the cell of the serving base station.

When the uplink control channel configuration information is the PRACH configuration information, the interference location includes an overlapping part between a location of a PRACH resource of a cell of the neighboring base station and a location of a downlink control channel resource of a cell of the serving base station.

Furthermore, that the UE determines, according to the configuration information, a location where the serving base station suffers interference from the neighboring base station includes:
The UE acquires the location of the PRACH resource of the cell of the neighboring base station according to a configuration index and a frequency domain offset in the PRACH configuration information of the cell of the neighboring base station, and determines the interference location according to the location of the PRACH resource of the cell of the neighboring base station and the location of the downlink control channel resource of the cell of the serving base station.

When the uplink control channel configuration information is the Sounding RS configuration information, the interference location includes an overlapping part between a location of a Sounding RS resource of a cell of the neighboring base station and a location of a downlink control channel resource of a cell of the serving base station.

That the UE determines, according to the configuration information, a location where the serving base station suffers interference from the neighboring base station includes:
The UE acquires the location of the Sounding RS resource of the cell of the neighboring base station according to a bandwidth configuration of a pilot symbol and a subframe configuration of the pilot symbol in the Sounding RS configuration information of the cell of the neighboring base station, and determines the interference location according to the location of the Sounding RS resource of the cell of the neighboring base station and the location of the downlink control channel resource of the cell of the serving base station.

For example, as shown in FIG. 8, PUCCH resources (that is, the slashed and shadowed parts on the upper and lower edges of the blank frames in FIG. 8) that occupy sidebands of a frequency band and are sent through subframes 0, 1, 5, and 6 in an FDD UL frequency band of a macro base station overlap (that is, the small black grid parts in the downlink subframes of a micro base station in the figure) with a part of PDCCH resources (that is, gridding sideband parts on the left of subframes in the figure) that are at sidebands and sent through downlink subframes 0, 1, 5, and 6 in an FDD UL frequency band of a micro base station. The overlapping parts are locations where a PUCCH of a cell of the macro base station interferes with a PDCCH of a cell of the micro base station. In FIG. 8 to FIG. 12, the small black grid parts in the downlink subframes of the micro base station are area schematic diagrams of interference between the PUCCH and the PDCCH. Locations of interference between the PUCCH and the PDCCH may be different according to different TDD configurations. In addition, when an uplink control channel (a PUCCH, a PRACH, or Sounding RS) and a downlink control channel (a PDCCH, CRS, a synchronization channel, or a broadcast channel) change, the interference locations also change; however, a specific interference elimination method and principle are consistent with the present invention. Therefore, details are not repeated herein.

1404. The UE eliminates the interference according to the determined interference location.

When location information of the interference is about an overlapping part between the location of the PUCCH resource of the cell of the macro base station and the location of the downlink control channel resource of the cell of the micro base station, that the interference is eliminated according to the location information of the interference includes:
The UE acquires a received power of an interference bit at the interference location according to the cyclically shifted sequence and the orthogonal code sequence of the uplink control resource of the cell of the macro base station, and the UE acquires, according to a received power of a resultant signal and the received power of the interference bit, a power of a downlink data signal sent by the cell of the micro base station where the UE is located, and acquires the downlink data signal according to the power of the downlink data signal.

Furthermore, the UE acquires the received power of the interference bit at the interference location specifically according to the cyclically shifted sequence and the orthogonal code sequence of the uplink control resource of the cell of the macro base station and by performing a code sequence correlation operation, and the UE subtracts the received power of the interference bit from the received power of the resultant signal to obtain the power of the downlink data signal sent by the micro base station where the UE is located, and acquires the downlink data signal according to the power of the downlink data signal.

When the location information of the interference is about an overlapping part between the location of the PRACH resource of the cell of the macro base station and the location of the downlink control channel resource of the cell of the micro base station, that the interference is eliminated according to the location information of the interference includes:
The UE acquires a received power of an interference bit at the interference location according to a PRACH access preamble configuration of the cell of the macro base station, and the UE acquires, according to a received power of a resultant signal and the received power of the interference bit, a power of a downlink data signal sent by the cell of the micro base station where the UE is located, and acquires the downlink data signal according to the power of the downlink data signal.

Furthermore, the UE acquires the received power of the interference bit at the interference location specifically according to the PRACH access preamble configuration of the cell of the macro base station, and the UE subtracts the received power of the interference bit from the received power of the resultant signal to obtain the power of the downlink data signal sent by the cell of the micro base station where the UE is located, and acquires the downlink data signal according to the power of the downlink data signal.

When the location information of the interference is about an overlapping part between the location of the Sounding RS resource of the cell of the macro base station and the location of the downlink control channel resource of the cell of the micro base station, that the interference is eliminated according to the location information of the interference includes:
The UE acquires a received power of an interference bit at the interference location by performing a code sequence correlation operation according to a Sounding RS code sequence of the cell of the macro base station, and the UE acquires, according to a received power of a resultant signal and the received power of the interference bit, a power of a downlink data signal sent by the cell of the micro base station where the UE is located, and acquires the downlink data signal according to the power of the downlink data signal.

If no PRACH access preamble configuration is received, the code sequence correlation operation is performed through all PRACH preambles to acquire the received power of the interference bit.

When the location information of the interference is about an overlapping part between the location of the Sounding RS resource of the cell of the macro base station and the location of the downlink control channel resource of the cell of the micro base station, that the interference is eliminated according to the location information of the interference includes:
The UE acquires a received power of an interference bit at the interference location by performing a code sequence correlation operation according to a Sounding RS code sequence of the cell of the macro base station, and the UE acquires, according to a received power of a resultant signal and the received power of the interference bit, a power of a downlink data signal sent by the cell of the micro base station where the UE is located, and acquires the downlink data signal according to the power of the downlink data signal.

Furthermore, the UE acquires the received power of the interference bit at the interference location specifically by performing the code sequence correlation operation according to the Sounding RS code sequence of the cell of the macro base station; and the UE subtracts the received power of the foregoing interference bit of the Sounding RS from the received power of the resultant signal to obtain the power of the downlink data signal sent by the micro base station where the UE is located, and acquires the downlink data signal according to the power of the downlink data signal.

In the embodiment of the present invention, a UE receives configuration information of a cell of a macro base station, where the configuration information is sent by a micro base station; the UE determines a location of interference according to the received configuration information of the macro base station; and the UE eliminates the interference according to the determined location of the interference. In this way, interference from sending uplink control signaling to receiving signaling of a downlink subframe in an FDD UL frequency band or a TDD frequency band by the micro base station is eliminated.

FIG. 15 is another interference processing method according to an embodiment of the present invention. A macro base station sends uplink control channel configuration information of the macro base station to a micro base station, and the micro base station avoids interference according to the received configuration information, that is, no resource is allocated at an interference location. In the embodiment of the present invention, the macro base station is taken as an example of a neighboring base station and the micro base station is taken as an example of a serving base station for illustration. Application scenarios of the method include but are not limited to those illustrated in the embodiment of the present invention. The method includes:
1501. A macro base station sends uplink control channel configuration information of a cell of the macro base station to a micro base station.

The configuration information includes uplink control channel configuration information or downlink control channel configuration information.

The uplink control channel configuration information may include PUCCH configuration information, PRACH configuration information, or channel sounding reference symbol (Sounding RS) configuration information of the cell of the macro base station. For details, refer to the content of step 1401 in the embodiment shown in FIG. 14. Details are not repeated herein.

The downlink control channel configuration information may include configuration information of a physical downlink control channel PDCCH or a common reference symbol CRS of the cell of the macro base station.

The PDCCH configuration information includes:
time domain configuration, which is represented through the number of symbols of each subframe occupied by the PDCCH; and
frequency domain configuration, which is represented through a frequency point and bandwidth of a PDCCH channel.

The CRS configuration information includes:
a frequency point and bandwidth sent by the CRS; and
the number of antennas used by the CRS.

1502. The micro base station adjusts, according to the received configuration information, an overlapping part of resource locations in configuration information of cells of the micro base station and the macro base station by allocating a resource.

Furthermore, if the micro base station receives the uplink control channel configuration information of the cell of the macro base station, that the micro base station adjusts, by allocating the resource, the overlapping part of the resources indicated in the configuration information of cells of the micro base station and the macro base station includes:
When the micro base station allocates the resource to a downlink control channel, the overlapping part between the resource location in the uplink control channel configuration information of the cell of the macro base station and the resource location in the downlink control channel configuration information of a cell of the micro base station is not allocated to the downlink control channel of the cell of the micro base station.

Furthermore, if the micro base station receives the downlink control channel configuration information of the cell of the macro base station, that the micro base station adjusts, by allocating the resource, the overlapping part of the resources in the configuration information of the cell of the micro base station and the cell of the macro base station includes:
Furthermore, when the micro base station allocates the resource to an uplink control channel, the overlapping part between the resource location in the downlink control channel configuration information of the cell of the macro base station and the resource location in the uplink control channel configuration information of the cell of the micro base station is not allocated to the uplink control channel of the cell of the micro base station.

Avoiding interference by the PDCCH is taken as an example, and as shown in FIG. 8, PDCCH resource locations of the macro base station are shown as slashes and shadows in blank frames. PDCCH resource locations of the micro base station may be at least one of the first three symbols of a subframe, for example, B1 in the left sideband of each subframe. Therefore, a part of PDCCH resources of the micro base station will suffer interference from a part of PUCCH resources of the macro base station. Interference locations are shown as small black grids in downlink subframes of the micro base station in FIG. 8. Overlapping parts (small black grid parts in FIG. 8) between PUCCH resource locations of a cell of the macro base station and PDCCH resource locations of a cell of the micro base station are not allocated to a downlink control channel of the micro base station, so as to eliminate interference. An avoidance scheme of other configuration information of the downlink control channel is similar to that of the PDCCH, only that the resource locations are different. Therefore, details are not repeated herein.

When interference from the micro base station to an uplink of the macro base station is considered, when allocating a PUCCH resource, the macro base station may also not allocate the overlapping parts (small black grid parts in FIG. 9) between the PUCCH resource locations of the macro base station and PDCCH resource locations of the micro base station to an uplink control channel, for example, a PUCCH, of the macro base station.

1503. The micro base station sends the adjusted configuration information to a UE.

For example, in FIG. 8, the micro base station adjusts the PDCCH bandwidth from a full bandwidth B1 to a narrower bandwidth B2. The micro base station may notify the UE of the adjusted bandwidth B2, and then the UE receives the PDCCH resource through the bandwidth B2.

A sending mode of the configuration information is similar to the content of step 1402 in the embodiment shown in FIG. 14. Therefore, details are not repeated herein.

1504. Optionally, the UE receives the adjusted configuration information sent by the micro base station and receives data according to the adjusted configuration information.

If the micro base station is also capable of sending other adjusted scheduling configuration information to the UE, the UE receives the data according to the PDCCH configuration information or other downlink scheduling configuration information. The PDCCH configuration information received by the UE is mainly a location of a resource block occupied by a PDCCH control channel, where the location of the resource block occupied by the PDCCH control channel may be represented through a frequency point where a PDCCH channel is located and bandwidth occupied by the PDCCH channel. When location information of a resource block occupied by a downlink control channel is not transferred, a same frequency point as the cell is used by default. Other scheduling information may also be a location of a resource block occupied by the scheduling information, where the location of the occupied resource block may also be represented through a frequency point where the resource is located and bandwidth occupied by the resource. If optional information of the resource frequency point is not transferred, a same frequency point as the cell is used by default.

In the embodiment of the present invention, configuration information of a cell of a macro base station is sent by the macro base station to a micro base station, and the micro base station avoids interference according to the received configuration information, that is, adjusts a location of a frequencydomain or a time domain of a PDCCH, a CRS, a synchronization channel, or a broadcast channel of a cell of the micro base station to eliminate generated interference with a resource in an uplink control channel of the macro base station, thereby eliminating interference from sending uplink control signaling to receiving signaling of a downlink subframe in an FDD UL frequency band or a TDD frequency band of the micro base station.

In addition, in the embodiment of the present invention, the configuration information of the cell of the macro base station is sent by the macro base station to the micro base station, and the micro base station avoids interference according to the received configuration information, that is, adjusts a location of a frequency or a time domain of a PUCCH, a PRACH, or a Sounding RS of a cell of the micro base station to eliminate interference with a resource in a downlink control channel of the macro base station, thereby eliminating interference from sending downlink control signaling to receiving signaling in an uplink subframe of the micro base station.

In the embodiment of the present invention, a macro base station is taken as an example for a neighboring base station and a micro base station is taken as an example of a serving base station for illustration. An application scenario provided in the present invention may not only be applied between a macro base station and a micro base station that use a same access technology, but may also be applied between a macro base station and a micro base station that use different access technologies.

Neighboring base stations provided in the embodiment of the present invention may be a heterogeneous network or may also be a homogeneous network, and may be an intra-frequency network or may also be an inter-frequency network.

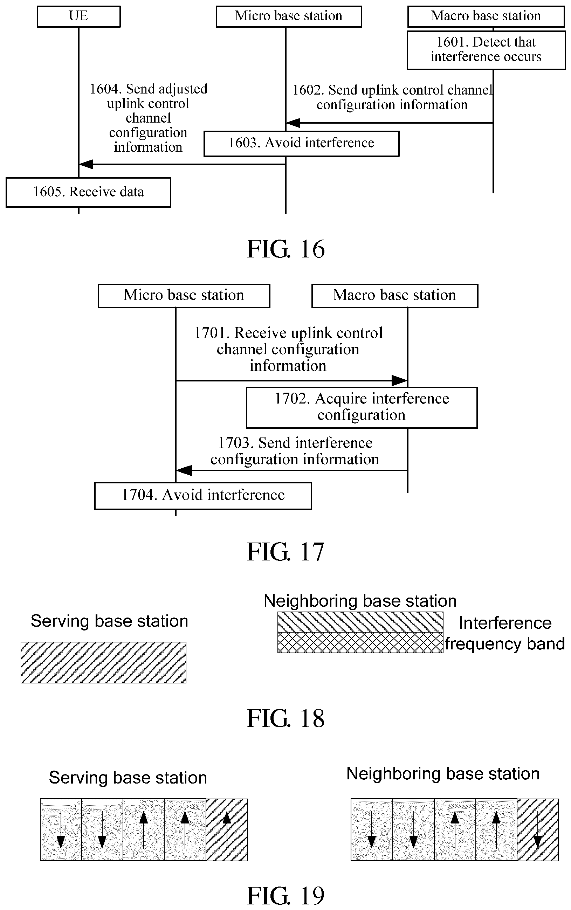

An interference elimination method provided in an embodiment shown in FIG. 16 is similar to the interference elimination method provided in the embodiment shown in FIG. 15. However, the differences are as follows:
The macro base station is capable of periodically sending configuration information to the micro base station;
the macro base station sends configuration information of the macro base station to the micro base station after detecting interference; or
after configuring a cell of the macro base station is completed, the macro base station sends the configuration information of the cell of the macro base station to the micro base station.

In this embodiment, the configuration information includes the uplink control channel configuration information used to be provided to the micro base station to eliminate interference in receiving downlink data. The downlink control channel configuration information is used to be provided to the micro base station to eliminate interference in receiving uplink data.

The following describes a case where interference is detected. Other cases are similar to the present invention. Therefore, details are not repeated herein. The case where interference is detected includes:
In the embodiment of the present invention, configuration information of a cell of a macro base station is sent from the macro base station to a micro base station, and the micro base station avoids interference according to the received configuration information, that is, adjusts a downlink control resource location or adjusts an uplink control resource location to eliminate generated interference with a resource in an uplink control channel of the macro base station, thereby eliminating interference from sending uplink control signaling to receiving signaling of a downlink subframe in an FDD UL frequency band or a TDD frequency band of the micro base station, or interference from sending downlink control channel of the micro base station to receiving uplink control channel of the macro base station.

In the foregoing embodiments, a micro base station and a macro base station are capable of correctly parsing configuration information of uplink and downlink control channels and uplink and downlink reference symbols of the macro base station. However, when the macro base station and the micro base station use different RATs, the micro base station cannot parse the configuration information of the control channels of the macro base station; alternatively, the macro base station cannot parse configuration information of control channels of the micro base station.

The foregoing interference problem also occurs between a neighboring base station and a serving base station in different access technologies.

The following solution is provided to solve a problem of interference between uplink and downlink control channels of neighboring base stations using a same access technology and different access technologies.

The present invention provides another interference processing method, and as shown in FIG. 17, a macro base station directly or indirectly indicates information of a location where interference exists for a micro base station, and the micro base station avoids the interference between control channels according to the information of the location. In the embodiment of the present invention, the macro base station is taken as an example of a neighboring base station, and the micro base station is taken as an example of a serving base station for illustration. Application scenarios of the method include but are not limited to those illustrated in the embodiment of the present invention. The method specifically includes:
1701. A macro base station receives configuration information of a cell of the micro base station.

The configuration information may include uplink and downlink frequency points, frequency band configuration information, uplink and downlink subframe configuration information, or the like of the cell of the micro base station.

1702. The macro base station acquires configuration information of a cell of the macro base station, and acquires, according to the configuration information of the cell of the macro base station and the configuration information of the cell of the micro base station, configuration information of a time domain and a frequency domain where the micro base station interferes with the macro base station.

The configuration information of the interference time domain and frequency domain includes resource location information of the time domain and the frequency domain where interference occurs or resource configuration information of the time domain and the frequency domain where the interference occurs.

The macro base station may acquire, according to a measurement, a performance specification, a protocol rule, a default mode, or the like, the configuration information of the time domain and the frequency domain where the micro base station interferes with the base station.

When a UE under the macro base station detects interference for the micro base station, the micro base station notifies the macro base station of a working frequency point of the micro base station and uplink-to-downlink ratio information. When the macro base station or a UE under the macro base station detects interference for the micro base station, the UE reports an interference detection measurement result to the macro base station, and the macro base station determines, according to configuration information of the micro base station reported by the base station or the UE, a location of a frequency domain or a time domain where the micro base station interferes with the micro base station.

The interference frequency domain of the micro base station is set according to an interference threshold, and a frequency band meeting the interference threshold is the location of the interference frequency domain.

The interference time domain of the micro base station is determined according to a timeslot in which the micro base station sends downlink data.

The method of determining the interference frequency domain according to a performance specification, a protocol rule, or a default mode includes defining a frequency domain range of a value. When an overlapping part exists in a frequency domain of the micro base station and a frequency domain of the macro base station within the set frequency domain range, it is considered that the overlapping part is an interference frequency domain part, for example, 5 MHz, 10 MHz, 30 MHz, or the like. For example, when frequency intervals of two base stations are within the foregoing set range, it is considered that interference exists in a frequency domain.

When the micro base station sends its working frequency band information, for example, a working frequency point and working bandwidth, to the macro base station, the macro base station determines information of an interference frequency band according to a working frequency band of the micro base station and a working frequency band of the macro base station itself. For example, in FIG. 18, the macro base station determines that a part of frequency bands (the frequency band in gridding shadow) are the frequency bands interfering with the micro base station. Then, the macro base station notifies the micro base station of information of the determined interference frequency band, and the micro base station avoids interference according to the configuration information of the interference frequency band when configuring an uplink or downlink control channel in the frequency band. That is to say, in the interference frequency domain, an uplink control channel is allocated a downlink control channel is allocated, or data is not scheduled or the like.

The configuration information of the interference frequency domain is represented through a central frequency point and a frequency band, or represented by means of an offset relative to a frequency.

A case where interference occurs in the time domain is similar. As shown in FIG. 19, it shows the interference in time domains of the micro base station and the macro base station.

When the micro base station sends working time and/or frequency configuration information of the micro base station to the macro base station, for example, a timeslot used for uplink resource configuration information and a timeslot used for downlink resource configuration information, an uplink-to-downlink ratio, or an uplink and downlink configuration mode index to the macro base station. The macro base station determines information of an interference time period according to the configuration information of the working time domain of the micro base station. For example, in FIG. 19, the macro base station determines that a part of timeslots (the slashed and shadowed parts) are timeslots when interference occurs in the micro base station. Then, the macro base station notifies the micro base station of information of the determined interference time domain, and the micro base station may consider the interference information and avoid the interference when configuring an uplink or a downlink control channel in the timeslot. That is to say, in the interference timeslot, an uplink control channel is not allocated, a downlink control channel is not allocated, or data is not scheduled or the like.

When a resource location of interference is determined simultaneously according to a time domain and a frequency domain, interference avoidance processing is performed in combination with the foregoing methods in FIG. 17 and in FIG. 18. Details are not repeated herein. For an interference time domain, a 1 ms radio frame is used as the unit of a timeslot, and a time domain resource susceptible to interference is indicated by means of Bitstring or by means of Bitmap.

If the time domain resource susceptible to interference covers a relatively large time span, the time domain may be indicated in radio frames. A frequency domain may be indicated by means of a central frequency point and a frequency band, or frequency point information may be represented by means of an offset relative to a frequency.

1703. The macro base station sends the configuration information of the time domain and the frequency domain where the micro base station interferes with the macro base station to the micro base station.

1704. When scheduling resources, the micro base station adjusts the configuration information of the interference time domain and frequency domain of the micro base station and the macro base station by allocating the resources.

Furthermore, that the configuration information of the interference time domain and frequency domain of the micro base station and the macro base station are adjusted by allocating the resources includes:
When the serving base station allocates the resource to a downlink control channel, an overlapping part between a resource location indicated in configuration information of the interference frequency domain or time domain of a cell of the neighboring base station and a resource location in the downlink control channel of a cell of the serving base station, or an interference frequency domain or time domain resource of the neighboring base station is not allocated to the downlink control channel of the cell of the serving base station.

When the serving base station allocates the resource to an uplink control channel, the overlapping part between the resource location indicated in the configuration information of the interference frequency domain or time domain of the cell of the neighboring base station and a resource in the uplink control channel of the cell of the serving base station, or the interference frequency domain or time domain resource of the neighboring base station is not allocated to the uplink control channel of the serving base station.

Regarding the uplink control channel configuration information and the downlink control channel configuration information, for details about the uplink control channel configuration information, reference is made to the content of step 1401 in the embodiment shown in FIG. 14; and for details about the downlink control channel configuration information, reference is made to the content of step 1501 in the embodiment shown in FIG. 15. Details are not repeated herein.

In the embodiment of the present invention, a macro base station receives configuration information of a micro base station, where the configuration information may include uplink and downlink frequency points, frequency band configuration information, uplink and downlink subframe configuration information, or the like of the micro base station. The macro base station acquires the configuration information according to a measurement, a performance specification, a protocol rule, or a default mode. When scheduling resources, the micro base station performs an interference avoidance operation according to configuration information of an interference time domain and frequency domain which is sent by the macro base station, thereby eliminating interference of scheduling of an uplink control channel, a downlink control channel, or data at the interference frequency domain or time domain location.

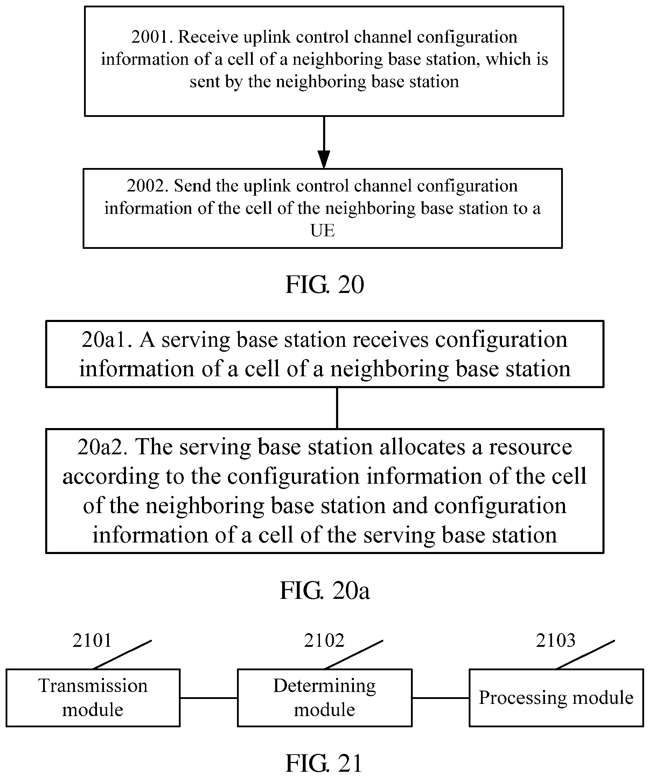

As shown in FIG. 20, an embodiment of the present invention further provides an interference processing method, including:
2001. A serving base station receives uplink control channel configuration information of a cell of a neighboring base station, which is sent by the neighboring base station.

The uplink control channel configuration information includes physical uplink control channel PUCCH configuration information, physical random access channel PRACH configuration information, or channel sounding reference symbol Sounding RS configuration information of the cell of the neighboring base station.

The PUCCH configuration information includes a location of an uplink control resource, a cyclically shifted sequence, an orthogonal code sequence of the uplink control resource, and a PUCCH offset.

The PRACH configuration information includes a PRACH configuration index, a frequency domain offset of the PRACH, and a PRACH access preamble configuration.

The Sounding RS configuration information includes a bandwidth configuration of a pilot symbol and a subframe configuration of the pilot symbol.

2002. The serving base station sends the uplink control channel configuration information of the cell of the neighboring base station to a UE.

The UE eliminates interference according to the uplink control channel configuration information.

According to an interference processing method provided in the embodiment of the present invention, a serving base station receives uplink control channel configuration information of a cell of a neighboring base station, and sends the configuration information to a UE, so that the UE determines, according to the configuration information, a location where the serving base station suffers interference from the neighboring base station, and eliminates the interference according to the location. In this way, when the neighboring base station sends uplink control signaling, interference between sending the uplink control signaling in an uplink control channel and receiving downlink control signaling in a downlink control channel at a corresponding location of the serving base station is eliminated.

FIG. 20a shows another interference processing method according to an embodiment of the present invention, including:
20a1. A serving base station receives configuration information of a cell of a neighboring base station, where the configuration information of the cell of the neighboring base station includes uplink control channel configuration information, downlink control channel configuration information, or configuration information of an interference frequency domain or time domain of the cell of the neighboring base station.
20a2. The serving base station allocates a resource according to the configuration information of the cell of the neighboring base station and configuration information of a cell of the serving base station.

The allocating a resource includes not allocating an overlapping part between resource locations in the configuration information of the cell of the serving base station and the configuration information of the cell of the neighboring base station to the serving base station.

According to the method provided in this embodiment of the present invention, a serving base station receives configuration information of a cell of a neighboring base station, and the serving base station allocates a resource according to the configuration information of the cell of the neighboring base station and configuration information of a cell of the serving base station. In this way, when the neighboring base station sends uplink control signaling, interference between sending the uplink control signaling in an uplink control channel and receiving downlink control signaling in a downlink control channel at a corresponding location of the serving base station is eliminated.

FIG. 21 shows an interference processing apparatus according to an embodiment of the present invention, including:
a transmission module 2101, configured to receive uplink control channel configuration information of a cell of a neighboring base station, which is sent by a serving base station, where the uplink control channel configuration information includes physical uplink control channel PUCCH configuration information, physical random access channel PRACH configuration information, or channel sounding reference symbol Sounding RS configuration information of the cell of the neighboring base station;
a determining module 2102, configured to determine, according to the configuration information received by the transmission module, a location where the serving base station suffers interference from the neighboring base station; and
a processing module 2103, configured to eliminate interference according to the interference location determined by the determining module.

Furthermore, the determining module of the interference processing apparatus according to the embodiment of the present invention is configured to:
determine, according to the configuration information received by the transmission module, that the serving base station suffers interference from an overlapping part between a location of a PUCCH resource of the cell of the neighboring base station and a location of a downlink control channel resource of a cell of the serving base station;
determine, according to the configuration information received by the transmission module, that the serving base station suffers interference from an overlapping part between a location of a PRACH resource of the cell of the neighboring base station and a location of a downlink control channel resource of a cell of the serving base station; or
determine, according to the configuration information received by the transmission module, that the serving base station suffers interference from an overlapping part between a location of a Sounding RS resource of the cell of the neighboring base station and a location of a downlink control channel resource of a cell of the serving base station.

Furthermore, the determining module of the interference processing apparatus according to the embodiment of the present invention is further configured to:
acquire the location of the PUCCH resource of the cell of the neighboring base station according to the location and offset of the uplink control resource in the PUCCH configuration information of the cell of the neighboring base station, where the PUCCH configuration information is in the configuration information received by the transmission module; and determine the interference location according to the location of the PUCCH resource of the cell of the neighboring base station and the location of the downlink control channel resource of the cell of the serving base station;
acquire the location of the PRACH resource of the cell of the neighboring base station according to a configuration index and a frequency domain offset in the PRACH configuration information of the cell of the neighboring base station, where the PRACH configuration information is in the configuration information received by the transmission module; and determine the interference location according to the location of the PRACH resource of the cell of the neighboring base station and the location of the downlink control channel resource of the cell of the serving base station; or
acquire the location of the Sounding RS resource of the cell of the neighboring base station according to a bandwidth configuration of a pilot symbol and a subframe configuration of the pilot symbol in the Sounding RS configuration information of the cell of the neighboring base station, where the Sounding RS configuration information is in the configuration information received by the transmission module; and determine the interference location according to the location of the Sounding RS resource of the cell of the neighboring base station and the location of the downlink control channel resource of the cell of the serving base station.

Furthermore, the processing module of the interference processing apparatus according to the embodiment of the present invention is configured to:
acquire a received power of an interference bit at the interference location according to a cyclically shifted sequence and an orthogonal code sequence of the uplink control resource of the cell of the neighboring base station; acquire, according to a received power of a resultant signal and the received power of the interference bit, a power of a downlink data signal sent by the cell of the serving base station where the UE is located; and acquire the downlink data signal according to the power of the downlink data signal;
acquire a received power of an interference bit at the interference location according to an access preamble configuration of the PRACH of the cell of the neighboring base station; acquire, according to a received power of a resultant signal and the received power of the interference bit, a power of a downlink data signal sent by the cell of the serving base station where the UE is located; and acquire the downlink data signal according to the power of the downlink data signal; or
acquire a received power of an interference bit at the interference location by performing a code sequence correlation operation according to a Sounding RS code sequence of the cell of the neighboring base station; acquire, according to a received power of a resultant signal and the received power of the interference bit, a power of a downlink data signal sent by the cell of the serving base station where the UE is located; and acquire the downlink data signal according to the power of the downlink data signal.

The embodiment of the present invention provides an interference processing apparatus, so that when a neighboring base station sends uplink control signaling, interference between sending uplink control signaling in an uplink control channel and receiving downlink control signaling in a downlink control channel at a corresponding location of a serving base station is eliminated.

In addition, when the neighboring base station sends the uplink control signaling at a co-channel or an adjacent channel location with the serving base station, interference from sending the uplink control signaling in the uplink control channel to receiving the downlink control signaling in the downlink control channel of the serving base station can be eliminated; alternatively, interference from sending downlink control signaling in a downlink control channel of the neighboring base station at a co-channel or an adjacent channel location with the serving base station to receiving uplink control signaling in an uplink control channel of the serving base station is eliminated.

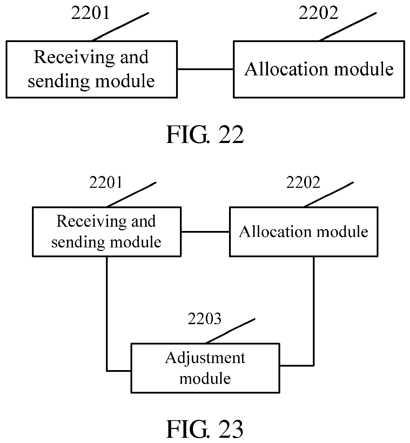

FIG. 22 shows another interference processing apparatus according to an embodiment of the present invention, including:
a receiving and sending module, configured to receive configuration information of a cell of a neighboring base station, where the configuration information of the cell of the neighboring base station includes uplink control channel configuration information, downlink control channel configuration information, or configuration information of an interference frequency domain or time domain of the cell of the neighboring base station; and
an allocation module, configured to determine an overlapping part between resources according to the configuration information of the cell of the neighboring base station and configuration information of a cell of a serving base station, and allocate a resource.

Furthermore, the allocation module is configured not to allocate an overlapping part between resource locations in the configuration information of the cell of the serving base station and the cell of the neighboring base station to the serving base station.

Furthermore, as shown in FIG. 23, the apparatus further includes an adjustment module, configured to adjust the configuration information of the cell of the serving base station according to the configuration information of the cell of the neighboring base station.

The configuration information of the cell of the serving base station does not include the overlapping part between resource locations in the configuration information of the cell of the serving base station and the configuration information of the cell of the neighboring base station, and the configuration information is adjusted by the adjustment module.

The receiving and sending module is further configured to send the configuration information of the cell of the serving base station to a user equipment UE, where the configuration information is adjusted by the adjustment module.

Furthermore, the allocation module of the interference processing apparatus according to the embodiment of the present invention is configured not to:
when the serving base station allocates the resource to a downlink control channel, allocate the overlapping part between a resource location in the uplink control channel configuration information of the cell of the neighboring base station and a resource location in the downlink control channel configuration information of the cell of the serving base station to the downlink control channel of the cell of the serving base station;
when the serving base station allocates the resource to an uplink control channel, allocate the overlapping part between a resource location in the downlink control channel configuration information of the cell of the neighboring base station and a resource location in the uplink control channel configuration information of the cell of the serving base station to the uplink control channel of the cell of the serving base station;
when the serving base station allocates the resource to a downlink control channel, not allocate the overlapping part between a resource location in the configuration information of the interference frequency domain or time domain of the cell of the neighboring base station and a resource location in the downlink control channel of the cell of the serving base station to the uplink control channel of the cell of the serving base station;
allocate the overlapping part between a resource location in the configuration information of the interference frequency domain or time domain of the neighboring base station and a resource location in the downlink control channel configuration information of the cell of the serving base station to the downlink control channel of the cell of the serving base station;
when the serving base station allocates the resource to an uplink control channel, allocate the overlapping part between a resource location in the configuration information of the interference frequency domain or time domain of the cell of the neighboring base station and a resource location in the uplink control channel configuration information of the cell of the serving base station to the downlink control channel of the cell of the serving base station; or
allocate the overlapping part between a resource location in the configuration information of an interference frequency domain or time domain resource of the neighboring base station and a resource location in the uplink control channel configuration information of the cell of the serving base station to the uplink control channel of the serving base station.

The embodiment of the present invention provides an interference processing apparatus, including: a receiving and sending module, configured to receive configuration information of a cell of a neighboring base station, where the configuration information of the cell of the neighboring base station includes uplink control channel configuration information, downlink control channel configuration information, or configuration information of an interference frequency domain or time domain of the cell of the neighboring base station; and an allocation module, configured to determine an overlapping part between resources according to the configuration information of the cell of the neighboring base station and configuration information of a cell of the serving base station, and allocate a resource, where the allocating a resource includes not allocating an overlapping part between resource locations in the configuration information of the cell of the serving base station and the cell of the neighboring base station to the serving base station. In this way, when the neighboring base station sends uplink control signaling, interference between sending the uplink control signaling in an uplink control channel and receiving downlink control signaling in a downlink control channel at a corresponding location of the serving base station is eliminated.

In addition, when the neighboring base station sends the uplink control signaling at a co-channel or an adjacent channel location with the serving base station, interference from sending the uplink control signaling in the uplink control channel to receiving the downlink control signaling in the downlink control channel of the serving base station can be eliminated; alternatively, interference from sending downlink control signaling in a downlink control channel of the neighboring base station at a co-channel or an adjacent channel location with the serving base station to receiving uplink control signaling in an uplink control channel of the serving base station is eliminated.

It should be noted that, in the foregoing user equipment and base station embodiments, included units are divided merely according to functional logic, but are not limited to the foregoing division so long as a corresponding function can be implemented. In addition, a specific name of each functional unit is only for better distinguishing each other, but is not used to limit the protection scope of the present invention.

In addition, persons of ordinary skill in the art may understand that all or part of the steps of the foregoing methods embodiments may be implemented by a program instructing relevant hardware. The program may be stored in a computer readable storage medium. The foregoing storage medium may include a read only memory, a magnetic disk, an optical disk, or the like.

The foregoing descriptions are merely exemplary specific embodiments of the present invention, but are not intended to limit the protection scope of the present invention. Any variation or replacement figured out by persons skilled in the art within the technical scope disclosed in the embodiments of the present invention shall fall within the protection scope of the present invention. Therefore, the protection scope of the present invention shall be subject to the protection scope of the claims.

## Claims

1. An interference processing method performed by a serving base station, comprising:
receiving (20al), by the serving base station, configuration information of a cell of a neighboring base station, wherein the configuration information of the cell of the neighboring base station comprises uplink control channel configuration information, downlink control channel configuration information, or configuration information of an interference frequency domain or time domain of the cell of the neighboring base station; and
allocating (20a2), by the serving base station, a resource according to the configuration information of the cell of the neighboring base station and configuration information of a cell of the serving base station, wherein:
the allocating a resource comprises not allocating an overlapping part between resource locations in the configuration information of the cell of the serving base station and the configuration information of the cell of the neighboring base station to the serving base station;
adjusting, by the serving base station, the configuration information of the cell of the serving base station according to the configuration information of the cell of the neighboring base station; and
sending, by the serving base station, the adjusted configuration information of the cell of the serving base station to a user equipment, UE, wherein:
the adjusted configuration information of the cell of the serving base station does not comprise the overlapping part between resource locations in the configuration information of the cell of the serving base station and the configuration information of the cell of the neighboring base station;
**characterized in that**,
if the serving base station receives the uplink control channel configuration information of the cell of the neighboring base station, the not allocating an overlapping part between resources in the configuration information of the cell of the serving base station and the cell of the neighboring base station to the serving base station comprises:
when the serving base station allocates a resource to a downlink control channel, not allocating an overlapping part between a resource location in the uplink control channel configuration information of the cell of the neighboring base station and a resource location in the downlink control channel configuration information of the cell of the serving base station to the downlink control channel of the cell of the serving base station; and
if the serving base station receives the downlink control channel configuration information of the cell of the neighboring base station, the not allocating an overlapping part between resources in the configuration information of the cell of the serving base station and the cell of the neighboring base station to the serving base station comprises:
when the serving base station allocates a resource to an uplink control channel, not allocating an overlapping part between a resource location in the downlink control channel configuration information of the cell of the neighboring base station and a resource location in the uplink control channel configuration information of the cell of the serving base station to the uplink control channel of the cell of the serving base station;
wherein
the uplink control channel configuration information comprises physical uplink control channel PUCCH configuration information, physical random access channel PRACH configuration information, or channel sounding reference symbol Sounding RS configuration information; and
the downlink control channel configuration information comprises physical downlink control channel PDCCH configuration information or common reference symbol CRS configuration information.

2. The method according to claim 1, wherein the receiving, by a serving base station, configuration information of a cell of a neighboring base station comprises:
periodically receiving, by the serving base station, the configuration information of the cell of the neighboring base station;
receiving, by the serving base station, configuration information of the neighboring base station sent after the neighboring base station detects interference; and
receiving, by the serving base station, the configuration information of the neighboring base station sent after configuring the neighboring base station is completed.

3. The method according to claim 1, wherein:
the configuration information of the interference frequency domain comprises modes of a central frequency point and a frequency band, or comprises modes of an offset relative to a frequency;
the configuration information of the interference time domain comprises information of an interference time domain resource, and the information is indicated through a radio frame as the unit of a timeslot by means of bitstring, by means of Bitmap, or through the unit of radio superframe.

4. A serving base station, comprising:
a receiving and sending module (2201), configured to receive configuration information of a cell of a neighboring base station, wherein the configuration information of the cell of the neighboring base station comprises uplink control channel configuration information, downlink control channel configuration information, or configuration information of an interference frequency domain or time domain of the cell of the neighboring base station;
an allocation module (2202), configured to determine an overlapping part between resource locations according to the configuration information of the cell of the neighboring base station and configuration information of a cell of a serving base station, and allocate a resource, wherein:
the allocation module (2202) is further configured not to allocate an overlapping part between resource locations in the configuration information of the cell of the serving base station and the cell of the neighboring base station to the serving base station; and
an adjustment module (2203), configured to adjust the configuration information of the cell of the serving base station according to the configuration information of the cell of the neighboring base station; wherein:
the receiving and sending module (2201) is further configured to send the adjusted configuration information of the cell of the serving base station to a user equipment UE, and the adjustment module (2203) is configured to adjust the configuration information, and
the adjusted configuration information of the cell of the serving base station does not comprise the overlapping part between resource locations in the configuration information of the cell of the serving base station and the configuration information of the cell of the neighboring base station; wherein:
if the serving base station receives the uplink control channel configuration information of the cell of the neighboring base station, the allocation module (2203) is further configured not to allocate an overlapping part between a resource location in the uplink control channel configuration information of the cell of the neighboring base station and a resource location in the downlink control channel configuration information of the cell of the serving base station to a downlink control channel of the cell of the serving base station when the serving base station allocates a resource to the downlink control channel; and
if the serving base station receives the downlink control channel configuration information of the cell of the neighboring base station, the allocation module (2202) is further configured not to allocate an overlapping part between a resource location in the downlink control channel configuration information of the cell of the neighboring base station and a resource location in the uplink control channel configuration information of the cell of the serving base station to an uplink control channel of the cell of the serving base station when the serving base station allocates a resource to the uplink control channel; wherein
the uplink control channel configuration information comprises physical uplink control channel PUCCH configuration information, physical random access channel PRACH configuration information, or channel sounding reference symbol Sounding RS configuration information; and
the downlink control channel configuration information comprises physical downlink control channel PDCCH configuration information or common reference symbol CRS configuration information.

5. A computer program product comprising instructions which, when the program is executed by a serving base station, cause the serving base station to carry out all the steps of the method according to any one of claims 1 to 3.

## Patentansprüche

1. Interferenzverarbeitungsverfahren, durchgeführt von einer bedienenden Basisstation, das Folgendes umfasst:
Empfangen (20a1), durch die bedienende Basisstation, von Konfigurationsinformationen einer Zelle einer benachbarten Basisstation, wobei die Konfigurationsinformationen der Zelle der benachbarten Basisstation Aufwärtsstrecken-Steuerkanal-Konfigurationsinformationen, Abwärtsstrecken-Steuerkanal-Konfigurationsinformationen oder Konfigurationsinformationen einer Störfrequenzdomäne oder Zeitdomäne der Zelle der benachbarten Basisstation umfassen; und
Zuweisen (20a2), durch die bedienende Basisstation, einer Ressource gemäß den Konfigurationsinformationen der Zelle der benachbarten Basisstation und den Konfigurationsinformationen einer Zelle der bedienenden Basisstation, wobei:
das Zuweisen einer Ressource das Nichtzuweisen eines überlappenden Teils zwischen Ressourcenorten in den Konfigurationsinformationen der Zelle der bedienenden Basisstation und den Konfigurationsinformationen der Zelle der benachbarten Basisstation zu der bedienenden Basisstation umfasst;
Anpassen, durch die bedienende Basisstation, der Konfigurationsinformationen der Zelle der bedienenden Basisstation gemäß den Konfigurationsinformationen der Zelle der benachbarten Basisstation; und
Senden, durch die bedienende Basisstation, der angepassten Konfigurationsinformationen der Zelle der bedienenden Basisstation zu einem Benutzergerät (UE), wobei:
die angepassten Konfigurationsinformationen der Zelle der bedienenden Basisstation nicht den überlappenden Teil zwischen Ressourcenorten in den Konfigurationsinformationen der Zelle der bedienenden Basisstation und den Konfigurationsinformationen der Zelle der benachbarten Basisstation umfassen;
**dadurch gekennzeichnet, dass**,
falls die bedienende Basisstation die Aufwärtsstrecken-Steuerkanal-Konfigurationsinformationen der Zelle der benachbarten Basisstation empfängt, das Nichtzuweisen eines überlappenden Teils zwischen Ressourcen in den Konfigurationsinformationen der Zelle der bedienenden Basisstation und der Zelle der benachbarten Basisstation zu der bedienenden Basisstation Folgendes umfasst:
wenn die bedienende Basisstation eine Ressource einem Abwärtsstrecken-Steuerkanal zuordnet, Nichtzuweisen eines überlappenden Teils zwischen einem Ressourcenort in den Aufwärtsstrecken-Steuerkanal-Konfigurationsinformationen der Zelle der benachbarten Basisstation und einem Ressourcenort in den Abwärtsstrecken-Steuerkanal-Konfigurationsinformationen der Zelle der bedienenden Basisstation zu dem Abwärtsstrecken-Steuerkanal der Zelle der bedienenden Basisstation; und
falls die bedienende Basisstation die Abwärtsstrecken-Steuerkanal-Konfigurationsinformationen der Zelle der benachbarten Basisstation empfängt, das Nichtzuweisen eines überlappenden Teils zwischen Ressourcen in den Konfigurationsinformationen der Zelle der bedienenden Basisstation und der Zelle der benachbarten Basisstation zu der bedienenden Basisstation Folgendes umfasst:
wenn die bedienende Basisstation eine Ressource einem Aufwärtsstrecken-Steuerkanal zuordnet, Nichtzuweisen eines überlappenden Teils zwischen einem Ressourcenort in den Abwärtsstrecken-Steuerkanal-Konfigurationsinformationen der Zelle der benachbarten Basisstation und einem Ressourcenort in den Aufwärtsstrecken-Steuerkanal-Konfigurationsinformationen der Zelle der bedienenden Basisstation zu dem Aufwärtsstrecken-Steuerkanal der Zelle der bedienenden Basisstation;
wobei:
die Aufwärtsstrecken-Steuerkanal-Konfigurationsinformationen Physical Uplink Control Channel (PUCCH)-Konfigurationsinformationen, Physical Random Access Channel (PRACH)-Konfigurationsinformationen oder kanalsondierende Referenzsymbol-Sondierungs-(RS)-Konfigurationsinformationen umfassen; und
die Abwärtsstrecken-Steuerkanal-Konfigurationsinformationen Physical Downlink Control Channel (PDCCH)-Konfigurationsinformationen oder Common Reference Symbol (CRS)-Konfigurationsinformationen umfassen.

2. Verfahren gemäß Anspruch 1, wobei das Empfangen, durch eine bedienende Basisstation, der Konfigurationsinformationen einer Zelle einer benachbarten Basisstation Folgendes umfasst:
periodisches Empfangen, durch die bedienende Basisstation, der Konfigurationsinformationen der Zelle der benachbarten Basisstation;
Empfangen, durch die bedienende Basisstation, der Konfigurationsinformationen der benachbarten Basisstation, die gesendet werden, nachdem die benachbarte Basisstation eine Störung erkennt; und
Empfangen, durch die bedienende Basisstation, der Konfigurationsinformationen der benachbarten Basisstation, die gesendet werden, nachdem das Konfigurieren der benachbarten Basisstation abgeschlossen ist.

3. Verfahren gemäß Anspruch 1, wobei:
die Konfigurationsinformationen der Störfrequenzdomäne Modi eines Mittenfrequenzpunkts und eines Frequenzbands umfassen, oder Modi eines Versatzes relativ zu einer Frequenz umfassen;
die Konfigurationsinformationen der Störungszeitdomäne Informationen einer Störungszeitdomänenressource umfassen, und die Informationen durch einen Funkrahmen als Einheit eines Zeitschlitzes mittels Bitstring, mittels Bitmap oder durch die Einheit eines Funk-Superframes angezeigt werden.

4. Bedienende Basisstation, die Folgendes umfasst:
ein Empfangs- und Sendemodul (2201), das dazu ausgelegt ist, Konfigurationsinformationen einer Zelle einer benachbarten Basisstation zu empfangen, wobei die Konfigurationsinformationen der Zelle der benachbarten Basisstation Aufwärtsstrecken-Steuerkanal-Konfigurationsinformationen, Abwärtsstrecken-Steuerkanal-Konfigurationsinformationen oder Konfigurationsinformationen einer Störfrequenzdomäne oder Zeitdomäne der Zelle der benachbarten Basisstation umfassen;
ein Zuordnungsmodul (2202), das dazu ausgelegt ist, einen überlappenden Teil zwischen Ressourcenorten gemäß den Konfigurationsinformationen der Zelle der benachbarten Basisstation und den Konfigurationsinformationen einer Zelle einer bedienenden Basisstation zu bestimmen und eine Ressource zuzuordnen, wobei:
das Zuordnungsmodul (2202) ferner dazu ausgelegt ist, einen überlappenden Teil zwischen Ressourcenorten in den Konfigurationsinformationen der Zelle der bedienenden Basisstation und der Zelle der benachbarten Basisstation nicht der bedienenden Basisstation zuzuordnen; und
ein Anpassungsmodul (2203), das dazu ausgelegt ist, die Konfigurationsinformationen der Zelle der bedienenden Basisstation gemäß den Konfigurationsinformationen der Zelle der benachbarten Basisstation anzupassen;
wobei:
das Empfangs- und Sendemodul (2201) ferner dazu ausgelegt ist, die angepassten Konfigurationsinformationen der Zelle der bedienenden Basisstation zu einem Benutzergerät (UE) zu senden, und das Anpassungsmodul (2203) dazu ausgelegt ist,
die Konfigurationsinformationen anzupassen, wobei die angepassten Konfigurationsinformationen der Zelle der bedienenden Basisstation nicht den überlappenden Teil zwischen Ressourcenorten in den Konfigurationsinformationen der Zelle der bedienenden Basisstation und den Konfigurationsinformationen der Zelle der benachbarten Basisstation umfassen,
wobei:
falls die bedienende Basisstation die Aufwärtsstrecken-Steuerkanal-Konfigurationsinformationen der Zelle der benachbarten Basisstation empfängt, das Zuordnungsmodul (2203) ferner dazu ausgelegt ist, einen überlappenden Teil zwischen einem Ressourcenort in den Aufwärtsstrecken-Steuerkanal-Konfigurationsinformationen der Zelle der benachbarten Basisstation und einem Ressourcenort in den Abwärtsstrecken-Steuerkanal-Konfigurationsinformationen der Zelle der bedienenden Basisstation nicht einem Abwärtsstrecken-Steuerkanal der Zelle der bedienenden Basisstation zuzuordnen, wenn die bedienende Basisstation eine Ressource dem Abwärtsstrecken-Steuerkanal zuordnet; und
falls die bedienende Basisstation die Abwärtsstrecken-Steuerkanal-Konfigurationsinformationen der Zelle der benachbarten Basisstation empfängt, das Zuordnungsmodul (2202) ferner dazu ausgelegt ist, einen überlappenden Teil zwischen einem Ressourcenort in den Abwärtsstrecken-Steuerkanal-Konfigurationsinformationen der Zelle der benachbarten Basisstation und einem Ressourcenort in den Aufwärtsstrecken-Steuerkanal-Konfigurationsinformationen der Zelle der bedienenden Basisstation nicht einem Aufwärtsstrecken-Steuerkanal der Zelle der bedienenden Basisstation zuzuordnen, wenn die bedienende Basisstation eine Ressource dem Aufwärtsstrecken-Steuerkanal zuordnet; wobei die Aufwärtsstrecken-Steuerkanal-Konfigurationsinformationen Physical Uplink Control Channel (PUCCH)-Konfigurationsinformationen, Physical Random Access Channel (PRACH)-Konfigurationsinformationen oder kanalsondierende Referenzsymbol-Sondierungs-(RS)-Konfigurationsinformationen umfassen; und
die Abwärtsstrecken-Steuerkanal-Konfigurationsinformationen Physical Downlink Control Channel (PDCCH)-Konfigurationsinformationen oder Common Reference Symbol (CRS)-Konfigurationsinformationen umfassen.

5. Computerprogrammprodukt, das Anweisungen umfasst, die, wenn das Programm durch eine bedienende Basisstation ausgeführt wird, die bedienende Basisstation veranlassen, alle Schritte des Verfahrens gemäß einem der Ansprüche 1 bis 3 auszuführen.

## Revendications

1. Procédé de traitement de brouillage réalisé par une station de base, consistant à :
recevoir (20a1), par la station de base de desserte, une information de configuration d'une cellule d'une station de base voisine, l'information de configuration de la cellule de la station de base voisine comprenant une information de configuration de canal de contrôle en liaison montante, une information de configuration de canal de contrôle en liaison descendante ou une information de configuration d'un domaine fréquentiel de brouillage ou d'un domaine temporel de brouillage de la cellule de la station de base voisine ; et
affecter (20a2), par la station de base de desserte, une ressource selon l'information de configuration de la cellule de la station de base voisine et une information de configuration d'une cellule de la station de base de desserte,
l'affectation d'une ressource consistant à ne pas affecter à la station de base de desserte une partie redondante entre des emplacements de ressource dans l'information de configuration de la cellule de la station de base de desserte et dans l'information de configuration de la cellule de la station de base voisine ;
régler, par la station de base de desserte, l'information de configuration de la cellule de la station de base de desserte selon l'information de configuration de la cellule de la station de base voisine ; et
envoyer, par la station de base de desserte, l'information de configuration réglée de la cellule de la station de base de desserte à un équipement d'utilisateur (UE),
l'information de configuration réglée de la cellule de la station de base de desserte ne comprenant pas la partie redondante entre des emplacements de ressource dans l'information de configuration de la cellule de la station de base de desserte et dans l'information de configuration de la cellule de la station de base voisine ;
le procédé étant **caractérisé en ce que** :
si la station de base de desserte reçoit l'information de configuration de canal de contrôle en liaison montante de la cellule de la station de base voisine, la non-affectation d'une partie redondante entre des ressources dans l'information de configuration de la cellule de la station de base de desserte et de la cellule de la station de base voisine à la station de base de desserte consiste à :
quand la station de base de desserte affecte une ressource à un canal de contrôle en liaison descendante, ne pas affecter une partie redondante entre un emplacement de ressource dans l'information de configuration de canal de contrôle en liaison montante de la cellule de la station de base voisine et un emplacement de ressource dans l'information de configuration de canal de contrôle en liaison descendante de la cellule de la station de base de desserte au canal de contrôle en liaison descendante de la cellule de la station de base de desserte ; et
si la station de base de desserte reçoit l'information de configuration de canal de contrôle en liaison descendante de la cellule de la station de base voisine, la non-affectation d'une partie redondante entre des ressources dans l'information de configuration de la cellule de la station de base de desserte et de la cellule de la station de base voisine à la station de base de desserte consiste à :
quand la station de base de desserte affecte une ressource à un canal de contrôle en liaison montante, ne pas affecter une partie redondante entre un emplacement de ressource dans l'information de configuration de canal de contrôle en liaison descendante de la cellule de la station de base voisine et un emplacement de ressource dans l'information de configuration de canal de contrôle en liaison montante de la cellule de la station de base de desserte au canal de contrôle en liaison montante de la cellule de la station de base de desserte ;
l'information de configuration de canal de contrôle en liaison montante comprenant une information de configuration de canal de contrôle physique en liaison montante (PUCCH), une information de configuration de canal de contrôle physique d'accès aléatoire (PRACH) ou une information de configuration de sondage de canal et de sondage de symbole de référence (RS) ; et
l'information de configuration de canal de contrôle en liaison descendante comprenant une information de configuration de canal de contrôle physique en liaison descendante (PDCCH) ou une information de configuration de symbole de référence commun (CRS).

2. Procédé selon la revendication 1, dans lequel la réception, par une station de base de desserte, d'une information de configuration d'une cellule d'une station de base voisine consiste à :
recevoir périodiquement, par la station de base de desserte, l'information de configuration de la cellule de la station de base voisine ;
recevoir, par la station de base de desserte, une information de configuration de la station de base voisine envoyée après la détection d'un brouillage par la station de base voisine ; et
recevoir, par la station de base de desserte, l'information de configuration de la station de base voisine envoyée après l'achèvement de la configuration de la station de base voisine.

3. Procédé selon la revendication 1, dans lequel :
l'information de configuration du domaine fréquentiel de brouillage comprend des modes d'un point de fréquence central et d'une bande de fréquences ou comprend des modes d'un décalage par rapport à une fréquence ;
l'information de configuration du domaine temporel de brouillage comprend une information d'une ressource en domaine temporel de brouillage, l'information étant indiquée par l'intermédiaire d'une trame radio en guise d'unité d'un créneau temporel au moyen d'une chaîne de bit ou au moyen d'une table de bits, ou par l'intermédiaire de l'unité d'une supertrame radio.

4. Station de base de desserte, comprenant :
un module de réception et d'envoi (2201), configuré pour recevoir une information de configuration d'une cellule d'une station de base voisine, l'information de configuration de la cellule de la station de base voisine comprenant une information de configuration de canal de contrôle en liaison montante, une information de configuration de canal de contrôle en liaison descendante ou une information de configuration d'un domaine fréquentiel de brouillage ou d'un domaine temporel de brouillage de la cellule de la station de base voisine ;
un module d'affectation (2202), configuré pour déterminer une partie redondante entre des emplacements de ressource selon l'information de configuration de la cellule de la station de base voisine et une information de configuration d'une cellule d'une station de base de desserte, et affecter une ressource,
le module d'affectation (2202) étant en outre configuré pour ne pas affecter à la station de base de desserte une partie redondante entre des emplacements de ressource dans l'information de configuration de la cellule de la station de base de desserte et de la cellule de la station de base voisine ; et
un module de réglage (2203), configuré pour régler l'information de configuration de la cellule de la station de base de desserte selon l'information de configuration de la cellule de la station de base voisine,
le module de réception et d'envoi (2201) étant en outre configuré pour envoyer l'information de configuration réglée de la cellule de la station de base de desserte à un équipement d'utilisateur (UE), et le module de réglage (2203) étant configuré pour régler l'information de configuration, et
l'information de configuration réglée de la cellule de la station de base de desserte ne comprenant pas la partie redondante entre des emplacements de ressource dans l'information de configuration de la cellule de la station de base de desserte et dans l'information de configuration de la cellule de la station de base voisine ;
et si la station de base de desserte reçoit l'information de configuration de canal de contrôle en liaison montante de la cellule de la station de base voisine,
le module d'affectation (2203) est en outre configuré pour ne pas affecter une partie redondante entre un emplacement de ressource dans l'information de configuration de canal de contrôle en liaison montante de la cellule de la station de base voisine et un emplacement de ressource dans l'information de configuration de canal de contrôle en liaison descendante de la cellule de la station de base de desserte à un canal de contrôle en liaison descendante de la cellule de la station de base de desserte quand la station de base de desserte affecte une ressource au canal de contrôle en liaison descendante ; et
et si la station de base de desserte reçoit l'information de configuration de canal de contrôle en liaison descendante de la cellule de la station de base voisine,
le module d'affectation (2202) est en outre configuré pour ne pas affecter une partie redondante entre un emplacement de ressource dans l'information de configuration de canal de contrôle en liaison descendante de la cellule de la station de base voisine et un emplacement de ressource dans l'information de configuration de canal de contrôle en liaison montante de la cellule de la station de base de desserte à un canal de contrôle en liaison montante de la cellule de la station de base de desserte quand la station de base de desserte affecte une ressource au canal de contrôle en liaison montante ;
l'information de configuration de canal de contrôle en liaison montante comprenant une information de configuration de canal de contrôle physique en liaison montante (PUCCH), une information de configuration de canal de contrôle physique d'accès aléatoire (PRACH) ou une information de configuration de sondage de canal et de sondage de symbole de référence (RS) ; et
l'information de configuration de canal de contrôle en liaison descendante comprenant une information de configuration de canal de contrôle physique en liaison descendante (PDCCH) ou une information de configuration de symbole de référence commun (CRS).

5. Produit de programme informatique comprenant des instructions qui, lorsque le programme est exécuté par une station de base de desserte, amènent la station de base de desserte à exécuter toutes les étapes du procédé selon l'une quelconque des revendications 1 à 3.
